# FASCICULE DE BREVET EUROPEEN

(11) **EP 1 435 534 B1**
(45) Date de publication et mention de la délivrance du brevet: **17.08.2005**
(21) Numéro de dépôt: 03293179.2
(22) Date de dépôt: 16.12.2003
(51) Int. Cl.: G02B 6/16, C03C 25/10, G02B 1/04

(54) **Fibre optique à au moins un réseau de bragg obtenue par inscription directe à travers le revêtement recouvrant la gaine**
Mindestens ein Bragggitter enthaltende optische Faser, die durch Einschreiben des Gitters erhalten wird, wobei das Einschreiben direkt durch den Überzug des Mantels des optischen Leiters erfolgt
Optical fibre containing at least one Bragg grating and obtained by writing the grating directly through a coating surrounding the fibre cladding

(30) Priorité: 03.01.2003 FR 0300027
(43) Date de publication de la demande: 07.07.2004
(73) Titulaire: ALCATEL, 75008 Paris (FR)
(72) Inventeur: André, Sébastien, 34570 Pignan (FR); Merlet, Samuel, 69008 Lyon (FR)
(74) Mandataire: Lamoureux, Bernard

(56) Documents cités:
- EP-A- 0 990 625
- EP-A- 1 172 391
- DECKER C: "High-speed curing by laser irradiation" NUCLEAR INSTRUMENTS & METHODS IN PHYSICS RESEARCH, SECTION - B: BEAM INTERACTIONS WITH MATERIALS AND ATOMS, NORTH-HOLLAND PUBLISHING COMPANY. AMSTERDAM, NL, vol. 151, no. 1-4, 2 mai 1999 (1999-05-02), pages 22-28, XP004416403 ISSN: 0168-583X

## Description

La présente invention se rapporte à une fibre optique à au moins un réseau de Bragg obtenue par inscription directe à travers le revêtement recouvrant la gaine.

De manière connue, les fibres optiques à réseau de Bragg comportent un coeur en silice dopé au germanium recouvert successivement d'une gaine en silice et d'un revêtement en un matériau choisi pour être transparent et thermorésistant au rayonnement d'inscription du réseau généralement émis par un laser et de type ultraviolet (UV). De cette manière, l'inscription du réseau de Bragg est réalisée dans le coeur et/ou la gaine directement à travers ce revêtement.

Le document intitulé "Grating writing though fiber coating at 244 nm and 248 nm" Chao et al, Electronics Letters, 27^{th} May, 1999 Vol 35, n°11, pp924-925 divulgue ainsi une fibre à un réseau de Bragg obtenue par une inscription directe du réseau dans le coeur de la fibre à travers son revêtement.

Le revêtement est en silicone qui présente une transmittance égale à 90% environ notamment à deux rayonnements UV d'inscription classiques: 244 nm et 248 nm. La résistance thermique de ce silicone est en outre validée par un passage dans un four à 300°C pendant 3 minutes.

Le plus petit réseau de Bragg décrit est long de 1 cm et présente un faible contraste - c'est à dire une variation d'indice de réfraction - de 2 10⁴, correspondant à une réflectivité de 92%.

Par ailleurs, l'inscription est réalisée selon une technique de balayage du faisceau laser qui nécessite un appareillage complexe.

Les propriétés mécaniques de ce silicone ne sont pas satisfaisantes, notamment en terme de longévité, la fibre pouvant par exemple se détériorer pendant son stockage. En outre, ce silicone n'est pas suffisamment résistant à l'eau ce qui est critique dans des liaisons sous-marines.

Ce silicone est le produit RTV615 de la société General Electric obtenu à partir d'une composition bicomposant réticulable à température ambiante, de six à sept jours à 25°C, et comportant de façon connue deux précurseurs du silicone, à mélanger juste avant l'application sur la gaine de la fibre. Le temps de vie de ce mélange est de quatre heures.

Cette composition, faiblement visqueuse, s'avère difficile à mettre en forme. Dès la mise en contact des deux précurseurs, la viscosité du mélange évolue très vite ce qui implique quel'épaisseur du revêtement, en moyenne égale à 60µm, n'est pas constante sur toute la longueur de la fibre. De plus, cette fibre ne peut être bobinée sur elle-même rapidement car le temps de durcissement est de l'ordre de plusieurs jours. Le contact de deux parties de la fibre lors du séchage provoque le collage du revêtement de celles-ci entre elles.

L'invention a pour objet de pallier les problèmes précités en fournissant une fibre optique à au moins un réseau de Bragg obtenue par inscription directe à travers le revêtement recouvrant la gaine optimisé en termes de résistance thermique et photochimique et de transparence au rayonnement d'inscription de type UV. Cette fibre doit avoir des bonnes propriétés mécaniques, une longévité améliorée, et le ou les réseaux de Bragg présenter des propriétés optiques ajustées en fonctions des applications recherchées.

L'invention propose à cet effet une fibre optique à au moins un réseau de Bragg comportant un coeur entouré successivement d'une gaine et d'un revêtement en un matériau sensiblement transparent à un rayonnement d'inscription dudit réseau de type ultraviolet, caractérisé en ce que le matériau dudit revêtement contient un premier réseau polymère interpénétré avec un deuxième polymère.

De manière connue, on appelle généralement Réseaux Polymères Interpénétrés, communément appelé IPN, (Interpenetrating Polymer Network ou Interpenetrated Polymer Network en anglais), un réseau polymère entremêlé avec un autre réseau polymère dans les trois dimensions de l'espace. Par conséquent, on a deux réseaux indépendants qui sont imbriqués l'un dans l'autre. Les IPNs sont présentés par L. H. Sperling dans le document intitulé An overview of Interpenatrating Networks in Polymeric Materials Encyclopedia; J. C. Salamone Ed., Vol. 5, CRC Press : Boca Raton, FL, 1996.

Plus précisément, dans une classification structurale, il existe les IPNs à deux réseaux '3D', les homos IPNs, les semi IPNs, les pseudos IPNs et les IPNs latex.

Dans la présente description, le matériau selon l'invention peut contenir l'un des types d'IPNs précités.

Un IPN à deux réseaux '3D' correspond à deux réseaux idéalement juxtaposés, ce qui crée beaucoup d'interactions et d'enchevêtrements entre les réseaux.

Les homos IPNs sont des IPNs où les deux réseaux '3D' sont fait du même polymère.

Dans les semi IPNs et les pseudos IPNs, l'un des deux composants présente une structure linéaire au lieu d'une structure réseau '3D'. En d'autres termes, on a plus qu'un seul réseau '3D' en présence d'un thermoplastique. Ce thermoplastique ne peut pas se déplacer dans le réseau, car cette inertie est liée, d'une part, à la longueur des chaînes polymères qui, par définition, sont de très grandes tailles - la masse moyenne en nombre des thermoplastiques étant comprise entre 10 000 et 1 million g.mol⁻¹ - et d'autre part, à la densité du réseau 3D. En effet, s le taux de réticulation est important, le thermoplastique sera très enchevêtré avec le réseau et aura du mal à s'en défaire.

Les IPNs font partie des matériaux hétérogènes comme les mélanges de polymères. Les mélanges de polymères et les IPNs sont proches au niveau de leur composition, mais il y a toutefois des différences bien distinctes. Les mélanges de polymères consistent généralement en deux polymères, voire plus, qui sont simplement mélangés ensemble. Dans ces mélanges aucun des composants n'est réticulé tandis que les IPNs consistent en deux composants polymères réticulés et enchevêtrés : cette structure « bloquée » ou figée de polymères réticulés assurant la stabilité du matériau dans le temps et faisait la supériorité des IPNs par rapport aux autres matériaux multicomposants.

Deux polymères incompatibles mélangés intimement, auront tendance à se séparer l'un de l'autre (loi de la thermodynamique). Cependant, si le mélange est bloqué par réticulation avant que la séparation des constituants débute, notamment en créant un réseau interpénétré, alors les deux composants ne peuvent pas se séparer.

Les IPNs disposent d'avantages majeurs par rapport aux mélanges de polymères. En effet, l'utilisation des système multi-composants permet d'obtenir des matériaux présentant une large gamme de propriétés et peut-être un effet de synergie avec l'une ou plusieurs des propriétés. Enfin, l'utilisation de réseau(x) '3D' permet d'être résistant à la plupart des solvants organiques.

Le matériau selon l'invention est conçu de façon à obtenir une transparence aux rayonnements ultraviolets, à augmenter les résistances thermiques et photochimiques du revêtement, même à des fluences élevées tout en conférant à la fibre des propriétés mécaniques améliorées, une étanchéité renforcée à l'eau, mais aussi aux solvants organiques.

Le matériau selon l'invention peut contenir une ou plusieurs des liaisons chimiques suivantes : C-C, C-Si, C-I, C-H, C-O, O-H, Si-O, Si-H, C-F, C-Cl, Ge-C, Ge-Si ces dernières n'ayant pas d'absorbance significative dans l'ultraviolet de longueur d'onde supérieure ou égale à 240 nm.

On choisira en outre un matériau exempt de noyaux aromatiques, d'insaturations conjuguées, ces éléments absorbant fortement un rayonnement ultraviolet.

Par exemple, les additifs - utilisés pour obtenir un polymère par exemple à base d'acrylate réticulé par irradiation ultraviolet - contiennent généralement de tels groupements et sont à éviter du fait de leur opacité.

De même, les catalyseurs à base de métal et notamment de platine tels que le Pt(AcAc)₂, PtCpMe₃ utilisés pour obtenir un polymère par hydrosylilation sont à éviter d'autant que la présence de métauxréduit la longévité de la fibre.

Avantageusement, ledit premier réseau polymère peut être obtenu à partir d'un premier composant réticulable par l'une des opérations suivantes de réticulation: la photoréticulation et la thermoréticulation.

La photoréticulation est déjà largement utilisée pour la fabrication de fibres optiques car elle est rapide, facile de mise en oeuvre et réalisable dans une tour de fibrage.

De façon connue, un IPN est soit séquentiel soit simultané.

Un IPN séquentiel est formé par la polymérisation d'un premier mélange d'un monomère, d'un agent de réticulation et d'un initiateur pour former un premier réseau. Ce réseau est ensuite « gonflé » avec le second mélange qui en polymérisant forme le second réseau enchevêtré dans le premier.

Un IPN simultané est formé par la polymérisation simultanée de deux paires d'un monomère avec un agent de réticulation. Dans ce processus, les deux monomères doivent polymériser selon deux réactions qui n'interfèrent pas l'une avec l'autre.

Un homo-IPN peut être réalisé via un processus simultané. Les semi-IPN ont obtenus via un processus séquentiel, et généralement on forme le réseau 3D en présence du thermoplastique tandis que les pseudo-IPN sont obtenus via un processus simultané.

Un IPN à deux réseaux '3D' peut être réalisé via un processus séquentiel ou simultané.

Dans un premier mode de réalisation, le deuxième polymère forme un deuxième réseau polymère et ledit premier réseau polymère est obtenu à partir dudit premier composant réticulable par une première desdites opérations de réticulation et le deuxième réseau polymère est obtenu à partir d'un deuxième composant réticulable par une deuxième distincte desdites opérations de réticulation.

Le premier composant peut être un précurseur de polymère photoréticulable porteur d'une fonction photoréticulable choisie de préférence parmi les fonctions acrylates, méthacrylates, thiol polyènes, époxys, vinyle éthers, et ledit deuxième composant est précurseur de polymère thermoréticulable.

Ledit matériau selon l'invention peut être obtenu à partir d'un mélange liquide qui comprend entre 3 et 95% en masse d'un précurseur de silicone photoréticulable et de préférence 64,5% et entre 5 et 97% masse d'un précurseur de silicone thermoréticulable et de préférence 35,5%. Et de manière générale, dans des proportions massiques des deux réseaux conférant de bonnes propriétés physiques et une bonne transparence à la longueur d'onde d'inscription.

Dans un deuxième mode de réalisation, le deuxième polymère forme un deuxième réseau polymère et ledit premier réseau polymère est obtenu à partir dudit premier composant photoréticulable par voie cationique et ledit deuxième réseau polymère est obtenu à partir d'un deuxième composant photoréticulable par voie radicalaire.

Dans un troisième mode de réalisation, ledit IPN est un semi-IPN ou un pseudo IPN, ledit deuxième polymère est un thermoplastique de préférence choisie parmi les polyfluorures de vinylidène et les copolymères de polyfluorures de vinylidène et de hexafluoropropène dit HFP.

L'invention s'applique à un dispositif optique incorporant un élément en un matériau tel que défini précédemment.

L'invention convient naturellement pour la fabrication de dispositifs contenant une fibre telle que définie précédemment. On peut citer par exemple de filtres optiques, de démultiplexeurs, de compensateurs de dispersion, et notamment les filtres égalisateurs de gain et tout particulièrement les filtres égalisateurs de pente (PTEQ pour Passive Tilt EQualize en anglais).

Le matériau selon l'invention peut aussi être utilisé pour tout autre élément qu'une fibre du moment qu'une transparence aux UV et/ou une résistance thermique et/ou chimique lui est utile. Par exemple, cet élément peut être une colle, un masque de phase ou un composant optique.

Les particularités et avantages de l'invention apparaîtront clairement à la lecture de la description qui suit, faite à titre d'exemple illustratif et non limitatif et faite en référence aux figures annexées dans lesquelles :
- la figure 1 montre le profil de transmittance T (exprimée en %) en fonction de la longueur d'onde (exprimée en nm) d'un substrat en silice revêtu d'un matériau selon l'invention contenant un IPN,
- la figure 2 représente une fibre optique à photoinscrire conforme à l'invention,
- la figure 3 représente une fibre à réseau de Bragg dans le mode de réalisation préféré de l'invention.

L'invention réside dans le choix d'un matériau contenant un IPN judicieusement sélectionné pour un revêtement d'une fibre optique à un ou plusieurs réseaux de Bragg c'est-à-dire permettant d'obtenir rapidement le revêtement, autorisant l'inscription directe de réseau(x) de Bragg, conférant à la fibre de bonnes propriétés mécaniques.

L'étape de formation de ce revêtement comprend d'abord la préparation d'un mélange liquide contenant :
- 64,5 % en masse de préférence d'un précurseur d'un polymère de préférence silicone, porteur d'une fonction photoréticulable choisie de préférence parmi les fonctions acrylates et époxy, par exemple commercialisé par les sociétés Rhodia, BASF, UCB, Roth,
- 35,5 % en masse de préférence d'un précurseur d'un polymère thermoréticulable de préférence silicone, par exemple les produits commercialisés par les sociétés Dow Corning, Rhodia, Wacker.

La partie photoréticulable rend la fabrication de la fibre plus facile à l'échelle industrielle.

La partie thermoréticulable améliore les propriétés thermomécaniques, la transparence aux UV et le contrôle de la viscosité, contrairement à une partie réticulable à température ambiante.

Ce mélange de viscosité contrôlée et égale à 5 Pa.s est ensuite appliqué sur une gaine de fibre en une monocouche de 60µm d'épaisseur à l'aide d'une tour d'enduction. Par ailleurs, la viscosité peut varier et être contrôlée entre 0,2 et 10 Pa.s d'après la nature et la composition des différents constituants.

L'IPN formé après les réticulations contient un premier réseau polymère interpénétré avec un deuxième réseau polymère et est exempt de noyaux aromatiques, d'insaturations conjuguées est transparent et résistant au rayonnement de type ultraviolet d'inscription d'un réseau de Bragg.

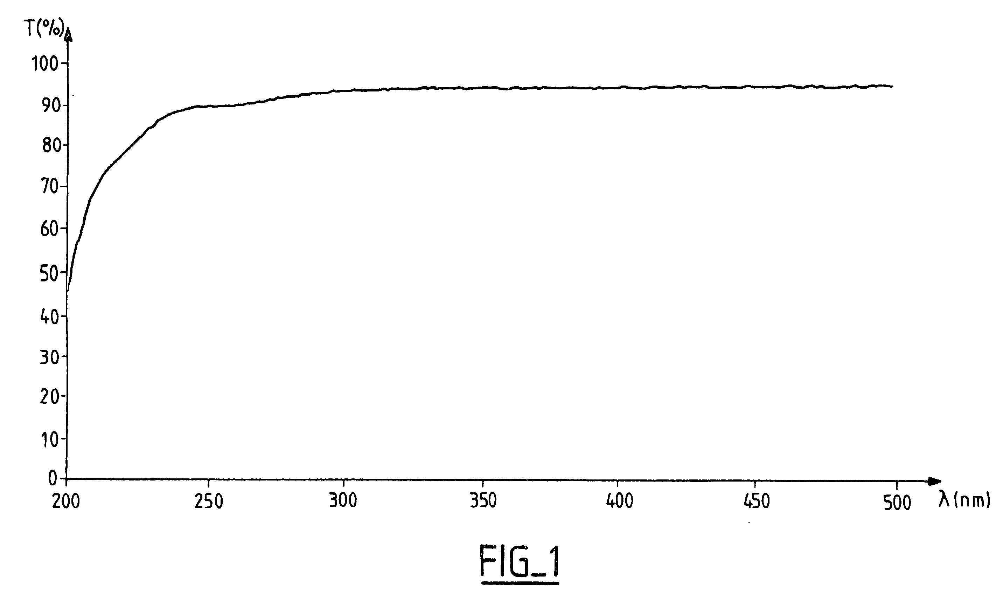

La figure 1 montre le profil de transmittance T (exprimée en %) en fonction de la longueur d'onde (exprimée en nm) d'un substrat en silice revêtu de 60µm du matériau contenant l'IPN qui vient d'être décrit.

On voit sur cette figure 1 que la transmittance T dépasse 90% entre 250 à 500 nm soit sur une large gamme de longueur d'onde.

Le précurseur de silicone est photoréticulable par un rayonnement de longueur d'onde distincte ou non de celle d'inscription dans la mesure où le silicone devient transparent après sa réticulation. Il est important de choisir un photoamorceur (si nécessaire) non absorbant dans les longueurs d'onde d'inscription.

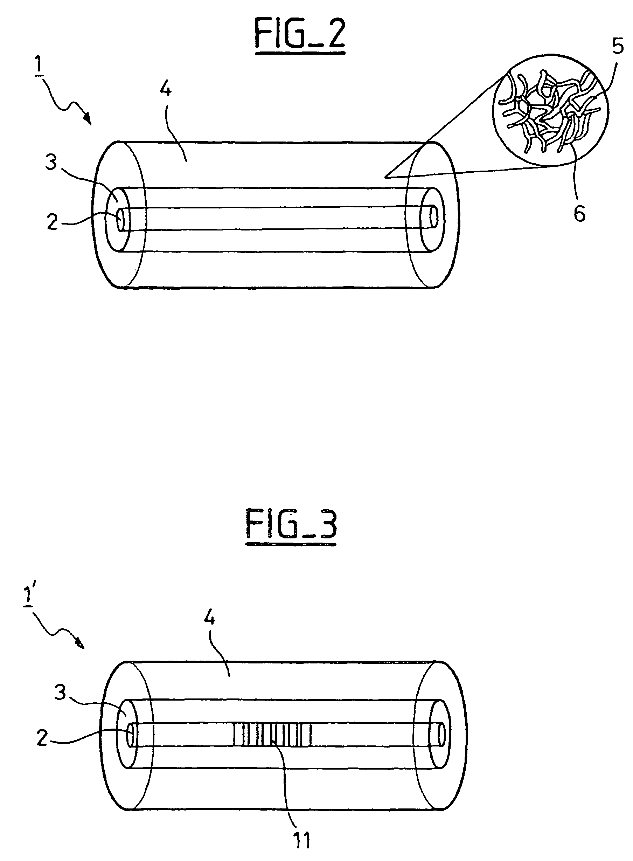

La fibre obtenue après la formation du revêtement est présentée, en vue longitudinale, en figure 2 où l'on voit cette fibre optique 1 qui comporte un coeur 2 en silice dopé au germanium, recouvert successivement d'une gaine 3 en silice et du revêtement en le matériau contenant un IPN 4.

Cette fibre peut être lovée sur une bobine pour hydrogénation sans se rompre et peut être stockée plusieurs mois sur cette bobine.

Le premier réseau polymère 5 est interpénétré avec le deuxième réseau polymère 6 (voir la zone agrandie en figure 2).

Une inscription d'un réseau de Bragg à travers le revêtement est ensuite réalisée en statique et à l'aide d'une source laser UV 8 de longueur d'onde par exemple choisie à 248 nm. La figure 3 est une vue longitudinale d'une fibre à réseau de Bragg 1' dans un mode de réalisation préféré de l'invention.

Les caractéristiques du réseau de Bragg 11 inscrit dans le coeur 2 sont les suivantes :
- longueur d'inscription : 4,6 mm,
- contraste : 2,2 10^{-4,}
- profondeur : 6,8 dB à 1568 nm.

Le contraste atteint est élevé sans dégradation du revêtement 4 même à une fluence choisie élevée, par exemple égale à 756 J/cm²: le matériau présente ainsi des résistances photochimiques et thermiques très élevées.

La fibre à réseau de Bragg 1' est par exemple destinée à être incorporée dans un dispositif optique (non représenté) par exemple de type filtre égalisateur de gain des amplificateurs optiques, compensateur de dispersion chromatique, multiplexeur optique à insertion/extraction.

Dans une première variante, la fibre 1' peut comprendre également un réseau de Bragg dans la gaine 3.

Dans une autre variante, afin d'augmenter l'indice de réfraction du revêtement au delà de 1,45 -qui correspond à l'indice de la silice dopée germanium- des additifs d'indice de réfraction adéquat sont ajoutés dans le mélange liquide durcissable en vue de fabriquer une fibre à réseau de Bragg oblique (Slanted Bragg Grating en anglais) efficace.

Bien entendu, l'invention n'est pas limitée au mode de réalisation qui vient d'être décrit.

La fibre peut comporter plusieurs réseaux de Bragg, la longueur du ou des réseaux de Bragg est à adapter en fonction des applications recherchées.

Enfin, on pourra remplacer tout moyen par un moyen équivalent sans sortir du cadre de l'invention.

## Revendications

1. Fibre optique (1') à au moins un réseau de Bragg (11) comportant un coeur (2) entouré successivement d'une gaine (3) et d'un revêtement (4), ladite fibre étant obtenue par inscription directe dudit réseau dans le coeur et/ou la gaine à travers le revêtement en un matériau sensiblement transparent à un rayonnement d'inscription dudit réseau de type ultraviolet, dans laquelle le matériau dudit revêtement contient un premier réseau polymère interpénétré (5) avec un deuxième polymère (6).

2. Fibre optique à au moins un réseau de Bragg selon la revendication 1 dans laquelle ledit premier réseau polymère est obtenu à partir d'un premier composant réticulable par l'une des opérations suivantes de réticulation: la photoréticulation et la thermoréticulation.

3. Fibre optique à au moins un réseau de Bragg selon la revendication 2 dans laquelle, lorsque le deuxième polymère forme un deuxième réseau polymère, ledit premier réseau polymère est obtenu à partir dudit premier composant réticulable par une première desdites opérations de réticulation et le deuxième réseau polymère est obtenu à partir d'un deuxième composant réticulable par une deuxième distincte desdites opérations de réticulation.

4. Fibre optique à au moins un réseau de Bragg selon la revendication 3 dans laquelle le premier composant est un précurseur de polymère photoréticulable porteur d'une fonction photoréticulable choisie de préférence parmi les fonctions acrylates, méthacrylates, thiol polyènes, époxys, vinyle éthers et ledit deuxième composant est un précurseur de polymère thermoréticulable.

5. Fibre optique à au moins un réseau de Bragg selon l'une des revendications 1 à 4 dans laquelle ledit matériau est obtenu à partir d'un mélange liquide qui comprend entre 3 et 95% en masse d'un précurseur de silicone photoréticulable et de préférence 64,5%, et entre 5 et 97% masse d'un précurseur de silicone thermoréticulable et de préférence 35,5%.

6. Fibre optique à au moins un réseau de Bragg selon l'une des revendications 1 ou 2 dans laquelle, lorsque le deuxième polymère forme un deuxième réseau polymère, ledit premier réseau polymère est obtenu à partir dudit premier composant photoréticulable par voie cationique et ledit deuxième réseau polymère est obtenu à partir d'un deuxième composant photoréticulable par voie radicalaire.

7. Fibre optique à au moins un réseau de Bragg selon l'une des revendications 1 ou 2 dans laquelle ledit deuxième polymère est un thermoplastique de préférence choisi parmi les polyfluorures de vinylidène et les copolymères de polyfluorures de vinylidène et de polyhexafluoropropène.

8. Dispositif optique incorporant une fibre à réseau de Bragg telle que définie selon l'une des revendications 1 à 7.

## Patentansprüche

1. Optische Faser (1') mit mindestens einem Bragg-Gitter (11), die einen Kern (2) beinhaltet, der nacheinander von einem Mantel (3) und einem Überzug (4) umhüllt ist, wobei die genannte Faser durch direktes Einschreiben des genannten Gitters in den Kern und/oder den Mantel durch den Überzug aus einem praktisch transparenten Material hergestellt wird, wobei das Einschreiben des genannten Gitters mit einer ultravioletten Strahlung erfolgt und das Material des genannten Überzugs ein erstes Polymernetzwerk (5) umfasst, das von einem zweiten Polymer (6) interpenetriert wird.

2. Optische Faser mit mindestens einem Bragg-Gitter gemäß Anspruch 1, wobei das genannte erste Polymernetzwerk aus einer ersten vernetzbaren Komponente durch eine der im Folgenden genannten Vernetzungsmethoden hergestellt wird: Fotovernetzung oder Wärmevernetzung.

3. Optische Faser mit mindestens einem Bragg-Gitter gemäß Anspruch 2, wobei das genannte erste Polymernetzwerk, wenn das zweite Polymer ein zweites Polymernetzwerk bildet, ausgehend von einer ersten vernetzbaren Komponente durch eine erste der genannten Vernetzungsmethoden hergestellt wird, und das zweite Polymernetzwerk ausgehend von einer zweiten vernetzbaren Komponente durch eine zweite, unterschiedliche Vernetzungsmethode hergestellt wird.

4. Optische Faser mit mindestens einem Bragg-Gitter gemäß Anspruch 3, wobei es sich bei der ersten Komponente um einen fotovernetzbaren Polymerzwischenstoff handelt, der Träger einer fotovernetzbaren Funktion ist, die vorzugsweise unter den folgenden Funktionen ausgewählt wird: Acrylate, Methacrylate, Thiol-Poylene, Epoxide, Vinylether, und wobei es sich bei der zweiten Komponente um einen wärmevernetzbaren Polymerzwischenstoff handelt.

5. Optische Faser mit mindestens einem Bragg-Gitter gemäß einem der Ansprüche 1 bis 4, wobei das genannte Material ausgehend von einer flüssigen Mischung hergestellt wird, die zwischen 3 und 95 Gewichtsprozent eines fotovernetzbaren Silikonzwischenstoffs, vorzugsweise jedoch 64,5 %, und zwischen 5 und 97 Gewichtsprozent eines wärmevernetzbaren Silikonzwischenstoffs, vorzugsweise jedoch 35,5 %, enthält.

6. Optische Faser mit mindestens einem Bragg-Gitter gemäß einem der Ansprüche 1 oder 2, wobei das erste Polymernetzwerk, wenn das zweite Polymer ein zweites Polymernetzwerk bildet, ausgehend von der genannten ersten fotovernetzbaren Komponente auf kationischem Wege hergestellt wird und das genannte zweite Polymernetzwerk ausgehend von einer zweiten fotovernetzbaren Komponente auf radikalartigem Wege hergestellt wird.

7. Optische Faser mit mindestens einem Bragg-Gitter gemäß einem der Ansprüche 1 oder 2, wobei es sich bei dem genannten zweiten Polymer um einen Thermoplasten handelt, und zwar vorzugsweise um einen der im Folgenden genannten: Polyvinylidenfluorid, Polyvinylidenfluorid-Copolymere und Polyhexafluorpropylen.

8. Eine optische Vorrichtung, die eine Faser mit einem Bragg-Gitter enthält und die in einem der Ansprüche 1 bis 7 definiert ist.

## Claims

1. An optical fiber having at least one Bragg grating, the fiber comprising a core surrounded successively by cladding and by a coating, said fiber being obtained by directly writing said grating in the core and/or the cladding through the coating which is made of a material that is substantially transparent to the ultraviolet type radiation used for writing said grating, in which the material of said coating contains a first polymer network interpenetrated by a second polymer.

2. An optical fiber having at least one Bragg grating according to claim 1, in which said first polymer network is obtained from a first component that is cross-linkable by one of the following cross-linking operations: photocuring and thermocuring.

3. An optical fiber having at least one Bragg grating according to claim 2, in which, when the second polymer forms a second polymer network, said first polymer network is obtained from said first cross-linkable component by a first of said cross-linking operations and the second polymer network is obtained from a second cross-linkable component by a distinct second one of said cross-linking operations.

4. An optical fiber having at least one Bragg grating according to claim 3, in which the first component is a photocurable polymer precursor carrying a photocuring function preferably selected from acrylate, methacrylate, thiol polyene, epoxy, and vinyl ether functions, and said second component is a precursor for a thermocurable polymer.

5. An optical fiber having at least one Bragg grating according to claim 1, in which said material is obtained from a liquid mixture comprising 3% to 95% by weight of a precursor of photocurable silicone and preferably 64.5%, and 5% to 97% by weight of a precursor of thermocurable silicone, and preferably 35.5%.

6. An optical fiber having at least one Bragg grating according to claim 1, in which, when the second polymer forms a second polymer network, said first polymer network is obtained from said first photocurable component by a cationic method and said second polymer network is obtained from a second photocurable component by a radical method.

7. An optical fiber having at least one Bragg grating according to claim 1, in which said second polymer is a thermoplastic preferably selected from polyvinylidene fluorides and copolymers of polyvinylidene fluorides and polyhexafluoropropene.

8. An optical device incorporating a fiber having a Bragg grating, the fiber comprising a core surrounded successively by cladding and by a coating, said grating being obtained by being written directly in the core and/or the cladding of the fiber through the coating which is made of a material that is substantially transparent to ultraviolet type radiation used for lighting said grating, wherein the material of said coating contains a first polymer network interpenetrated with a second polymer.
